# EUROPÄISCHE PATENTANMELDUNG

(11) **EP 3 498 422 A1**
(43) Veröffentlichungstag der Anmeldung: **19.06.2019**
(21) Anmeldenummer: 18210306.9
(22) Anmeldetag: 05.12.2018
(51) Int. Cl.: B23Q 11/00, B23Q 1/54

(54) **WERKZEUGMASCHINE MIT EINER DAS WERSTÜCK AUFNEHMENDEN SCHWENKBRÜCKE**

(30) Priorität: 12.12.2017 DE 202017107553 U
(71) Anmelder: Starrag GmbH, 09117 Chemnitz (DE)
(72) Erfinder: Muck, Andreas, 09235 Burkhardtsdorf (DE); Melzer, Michael, 09481 Scheibenberg (DE)
(74) Vertreter: Rumrich, Gabriele

(57) **Zusammenfassung**

Die Erfindung betrifft eine Werkzeugmaschine, welche eine um eine Schwenkachse (S) schwenkbare Schwenkbrücke (2) zur Aufnahme eines zu bearbeitenden Werkstücks aufweist, wobei an mindestens einem Schwenklager (1.3) der Schwenkbrücke (2) entlang der Schwenkachse sich eine Kurbelwelle erstreckt und dass quer zu der Schwenkachse (S) ausgerichtete und an sich gegenüberliegenden Seiten des Schwenklagers (1.3) in die Kurbelwelle (4) eingreifende hintereinander angeordnete Stellelemente (3.1, 3.2) angeordnet sind, mit welchen mittels der Kurbelwelle (4) ein Drehmoment auf das Schwenklager (1.3) übertragbar ist, welches dem durch das Gewicht des Werkstückes und der Vorrichtung verursachte Drehmoment der Schwenkbrücke (2) entgegenwirkt.

## Beschreibung

Die Erfindung betrifft eine Werkzeugmaschine mit einer Schwenkbrücke nach dem Oberbegriff des ersten Patentanspruchs.

Die Bewegungskraft zum Bewegen der Schwenkbrücke, die auch als Schwenkträger oder schwenkbarer Werkstückträger bezeichnet wird, wird derzeit meist über ein Zwischengetriebe zwischen Motor und Schwenkbrücke erzeugt. Dies kann beispielweise durch ein Zykloidgetriebe durch ein Schnecken-Schneckenradgetriebe oder ein Rädergetriebe erreicht werden. Hierbei handelt es sich dann nicht um einen Direktantrieb.
Um diese Antriebe im Bauraum zu begrenzen ist bei den meisten Schwenkbrücken am Markt die Spanntischoberfläche immer in der Nähe der Drehachse der Schwenkbrücke. Die Folge daraus ist, dass eine günstige Schwerpunktlage der Schwenkbrücke gegeben ist und das erzeugte Werkstückmoment eine große antriebsentlastende Wirkung erzeugt. Nachteilig ist, dass sehr große Bewegungen der Antriebsachsen bei simultaner Bearbeitung notwendig sind.

Die Rundachse ist dabei konstruktionsbedingt mit einem Gewichtsmoment in Abhängigkeit der Winkellage beaufschlagt. Im ungeklemmten Zustand- z.B. bei einer Simultanbearbeitungmuss der Antrieb diesem Gewichtsmoment entgegenwirken. Dies erfordert eine entsprechend groß dimensionierte Antriebsauslegung und führt insbesondere bei Direktantrieb zu erhöhter Erwärmung.

Aus der Druckschrift DE 10 2009 057 423 A1 ist eine Werkzeugmaschine mit hydraulisch stabilisiertem Schwenkträger bekannt. Hierbei wird auf der dem Antriebsmotor gegenüberliegenden Seite ein Hydraulikzylinder angebracht, der die Torsion der Schwenkvorrichtung verhindern soll. Dazu findet eine Dreh-/Torsionsmomentkompensationeinrichtung, bestehend aus einer Kolben-Zylinder-Einheit Anwendung, um das auf den Schwenkträger einwirkende Torsionsmoment zumindest resultierend aus Gewichtskraft des Schwenkträgers sowie Gewichtskraft des Werkstückträgers und Werkstück zu kompensieren. Der Antriebsmotor übernimmt nach wie vor die Hauptlast bei der Bewegung der Schwenkbrücke. Als nachteilig erweist sich die komplizierte hydraulische Ansteuerung des Torsionsmomentausgleiches. Da der Zylinder aktiv angesteuert wird, erzeugt dieser kein zusätzliches Kippmoment und damit keine Verformungen.

Durch das EP 1 380 382 B1 sind mehrere Varianten einer hydraulischen Massenkompensation bekannt. Aus der Fig. 13 der EP 1 380 382 B1 ist eine Schwenkbrücke ersichtlich, welche ein Werkstück in vertikaler Richtung bewegt und schwenkt. Die Schwenkbewegung wird durch einen Gewichtausgleich unterstützt. Dabei ist ein Pneumatikzylinder an die Schwenkbrücke gekoppelt. Dieser Zylinder ist zusätzlich nicht noch einmal seitlich gelagert, so dass es zu nachteiligen Biegemomenten kommt.

Aus der Druckschrift EP 1 524 068 B1 ist eine Werkzeugmaschine mit schwenkbarem Werkstückträger, dessen Torsionsmoment kompensiert ist, bekannt. Dabei ist der Abstand der Kraft-Antriebs-Stelle von der Schwenk-Achse veränderbar, wodurch ein hoher konstruktiver Aufwand zu verzeichnen ist.
Bekannte Lösungen benötigen weiterhin einen großen Bauraum und einen erhöhten Energiebedarf.

In der Druckschrift US 9,616,536 B2 wird ein Gewichtsausgleich für eine Schwenkbrücke einer Werkzeugmaschine beschrieben. Die Schwenkbrücke weist eine erste und zweite Lagerung auf, wobei an jeder Seite der Schwenkbrücke im Bereich der Lagerung zwei Stellelemente vorgesehen sind, die Erschütterungen und entstehende Schwingungen während der Bearbeitung reduzieren. Jedoch ist mit dem genannten Gewichtsausgleich eine drehmomentabhängige Ansteuerung beziehungsweise das Aufbringen eines entgegenwirkenden Drehmoments nicht vorgesehen und daher nicht möglich.

Die Aufgabe der Erfindung besteht darin, eine Werkzeugmaschine mit einer Schwenkbrücke zur Aufnahme eines Werkstücks zu entwickeln, mit welcher ein verbleibendes bauartbedingtes Drehmoment auf die Schwenkachse der Schwenkbrücke weitgehend ausgeglichen wird, ohne dabei Biegemomente in die Schwenkbrücke oder zugehörige Bauteile einzuleiten.

Diese Aufgabe wird erfindungsgemäß mit den Merkmalen des ersten Patentanspruchs dadurch gelöst, dass die Werkzeugmaschine, welche eine um eine Schwenkachse schwenkbare Schwenkbrücke zur Aufnahme eines zu bearbeitenden Werkstücks aufweist, erfindungsgemäß sich an mindestens ein Schwenklager der Schwenkbrücke entlang der Schwenkachse eine Kurbelwelle (4) erstreckt und dass quer zur Schwenkachse ausgerichtete und an sich gegenüberliegenden Seiten des Schwenklagers in die Kurbelwelle (4) eingreifende hintereinander angeordnete Stellelemente angeordnet sind. Mit den Stellelementen ist ein Drehmoment auf das Schwenklager übertragbar, welches dem Drehmoment der Schwenkbrücke entgegenwirkt.

Die Stellelemente sind dabei bevorzugt in Form zweier sich gegenüber liegend angeordneter Zylinder ausgebildet, deren Axialkräfte sich weitestgehend oder vollständig kompensieren.

Insbesondere sind die beiden Stellelemente in Form von hydraulischen Zylindern eines hydraulischen Gewichtsausgleichs ausgebildet und greifen vorzugsweise als geschlossenes System mit Druckflüssigkeitsspeicher an dem Schwenklager an.

Bevorzugt greifen an einem Schwenklager mindestens zwei Stellelemente in Form zweier Hydraulikzylinder an, die sich im Wesentlichen gegenüberliegend angeordnet sind, wobei mit jedem Schwenklager ein lageabhängiges Drehmoment auf das Schwenklager der Schwenkbrücke übertragbar ist.

Mit jedem Hydraulikzylinder ist dabei eine Axialkraft erzeugbar derart, dass sich die Axialkräfte der beiden Zylinder durch eine geschlossene Verbindung aufheben oder weitestgehend aufheben, so dass zwar ein lageabhängiges Drehmoment, aber kein oder nur ein geringes Biegemoment auf die Schwenkachse wirkt.

Bevorzugt wird die mechanische Anbindung der Hydraulikzylinder über eine Kurbelwelle realisiert.

Bisherige Ansätze führten zu einer hohen Querkraft beziehungsweise zu einem hohen Biegemoment auf die Schwenkachse und waren damit für eine Bearbeitung im geforderten Genauigkeitsbereich einer Werkzeugmaschine nicht anwendbar. Die Erfindung löst dieses Problem durch Einsatz zweier gegenüberliegender Zylinder, deren Axialkräfte sich weitestgehend kompensieren. Durch eine geschlossene Ausführung des Gewichtsausgleichsystems (direkte Kopplung der beiden Zylinder und Lagerung der Kurbelwelle) kann das benötigte Drehmoment winkelabhängig bereitgestellt werden, ohne dass die Zylinderkräfte in die Tischbaugruppe eingeleitet werden. Dadurch wird eine Verformung der genauigkeitsrelevanten Bauteile minimiert und die Genauigkeit des Bearbeitungszentrums deutlich erhöht. Aufgrund der Genauigkeitssteigerung wird der Einsatz eines hydraulischen Gewichtsausgleichs für winkelabhängig belastete Rundachsen in Bearbeitungszentren erst ermöglicht.

Mit der erfindungsgemäßen Lösung Reduzieren sich die Herstellkosten durch Einsparungen im Antriebsstrang. Es kann ein Torquemotor entfallen sowie ein Leistungsmodul und ein Kabelsatz.
Weiterhin reduzieren sich die Betriebskosten durch eine Erhöhung der Energieeffizienz bei Einsatz eines energieneutralen Gewichtsausgleichs. Das Gewicht der Schwenkbrücke muss in der Lageregelung nicht allein durch den Antrieb gehalten werden, d.h. es wird weniger Energie benötigt. Aufgrund der geringeren Verlustleistung im Achsantrieb ist weiterhin eine geringere Kühlleistung als bei herkömmlichen Lösungen erforderlich.

Ein weiterer Vorteil besteht in der erhöhten Bearbeitungsgenauigkeit und der erhöhten Dynamik, wobei zusätzlich der erforderliche Bauraum reduziert werden kann.

Die Erfindung wird nachfolgend anhand von Ausführungsbeispielen und zugehörigen Zeichnungen erläutert.

Es zeigen:
- Figur 1: eine Werkzeugmaschine mit Schwenkbrücke nach dem Stand der Technik,
- Figur 2: eine Prinzipskizze einer erfindungsgemäßen Schwenkbrücke mit Gewichtsausgleich,
- Figur 3: die Einzeldarstellung des Gewichtsausgleichs mit den zwei Hydraulikzylindern, die auf zueinander versetzten Längsachsen angeordnet sind,
- Figur 4: einen Längsschnitt durch den Gewichtsausgleich gem. Figur 3,
- Figur 5: die Prinzipdarstellung des Gewichtsausgleichs in der 0° Position,
- Figur 6: die Prinzipdarstellung des Gewichtsausgleichs in der -180° Position,
- Figur 7: die Prinzipdarstellung des Gewichtsausgleichs in der -90° Position,
- Figur 8: die Prinzipdarstellung des Gewichtsausgleichs in der +90° Position.

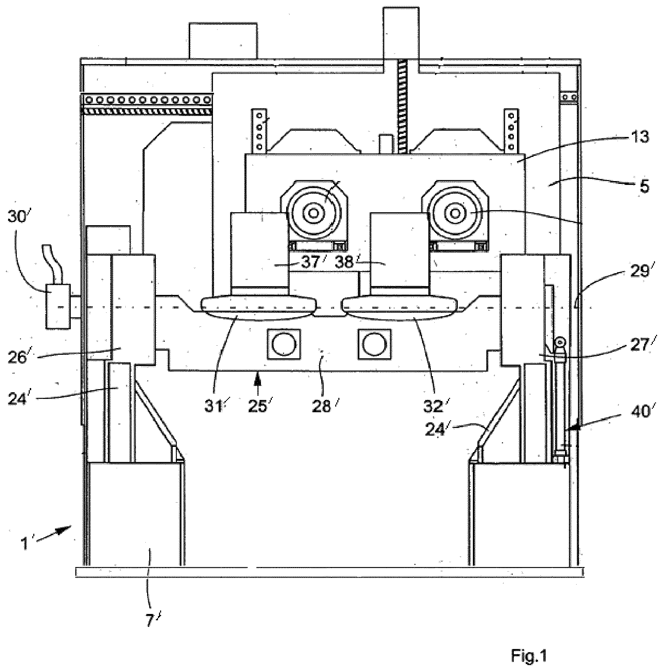

Bei der in der in Figur 1 dargestellten Werkzeugmaschine nach dem Stand der Technik DE 10 2009 057 423 A1 wird ein Ständer 1' über ein Untergestell 7' auf einer Fundamentplatte abgestützt. Der Werkstückträger 25' ist nach Art einer Schwenkbrücke ausgebildet, die auf dem Werkstückträgerbett 24' (fest) abgestützte Seitenwangen 26', 27' aufweist, in denen ein Schwenkträger 28' um eine im Wesentlichen horizontale Schwenkachse 29' schwenkbar gelagert ist. Der Schwenkantrieb erfolgt mittels eines Schwenkmotors 30', der an einem Endabschnitt des Schwenkträgers bzw. der Schwenkbrücke 28' angreift. Auf dem Schwenkträger 28' sind hier zwei Drehtische 31', 32' angeordnet, die jeweils mittels eines im Schwenkträger 28' angebrachten Elektromotors drehantreibbar sind. Auf den Drehtischen 31', 32' ist jeweils ein Werkstückträger 37', 38' angebracht, der ein zu bearbeitendes Werkstück aufnehmen kann. Bei einem derartigen, aus dem Stand der Technik bereits bekannten Aufbau liegt in der Regel der Schwerpunkt der Schwenkbrücke 28' einschließlich der daran montierten Drehtische 31' und 32' sowie den Werkstückträgern 37', 38' außerhalb der Schwenkachse 29'. Je nach Form und Gewicht der auf den Werkstückträger 37', 38' anzubringenden Werkstücke verschiebt sich der Schwerpunkt relativ zur Schwenkachse 29', wodurch die Unwucht gegebenenfalls sogar noch vergrößert werden kann. Durch diese außerhalb der Schwenkachse 29' befindliche Lage des Schwerpunktes wird bei Verschwenken der Schwenkbrücke 28' um deren Schwenkachse 29' in eine Lage, in der sich der Schwerpunkt 39' nicht senkrecht unterhalb der Schwenkachse 29' befindet, während einer festen Arbeitsstellung der Schwenkbrücke 28' zur Bearbeitung von Werkstücken in dieser verschwenkten Lage ein statisches Drehmoment auf den Schwenkträger 28' ausgeübt, das durch die am Schwerpunkt angreifende Schwerkraft gebildet wird. Da der Schwenkträger 28' in dieser Arbeitsstellung mittels des Schwenkmotors 30' festgehalten wird, der an einem Endabschnitt der Schwenkbrücke 28' angreift, wird auf die Schwenkbrücke 28' ein Torsionsmoment ausgeübt. Um dieses Torsionsmoment zu kompensieren, greift zumindest an dem den Schwenkmotor 30' abgewandten Endabschnitt des Schwenkträgers 28' eine Kompensationseinrichtung 40' an, über die die entstehenden Torsionsmomente innerhalb der Schwenkbrücke kompensiert werden sollen. Diese Kompensationseinrichtung wirkt mit einer Axialkraft auf die Schwenkachse 29b' des Schwenklagers der Schwenkbrücke 28', was sich unter anderem negativ auf die Genauigkeit auswirkt.

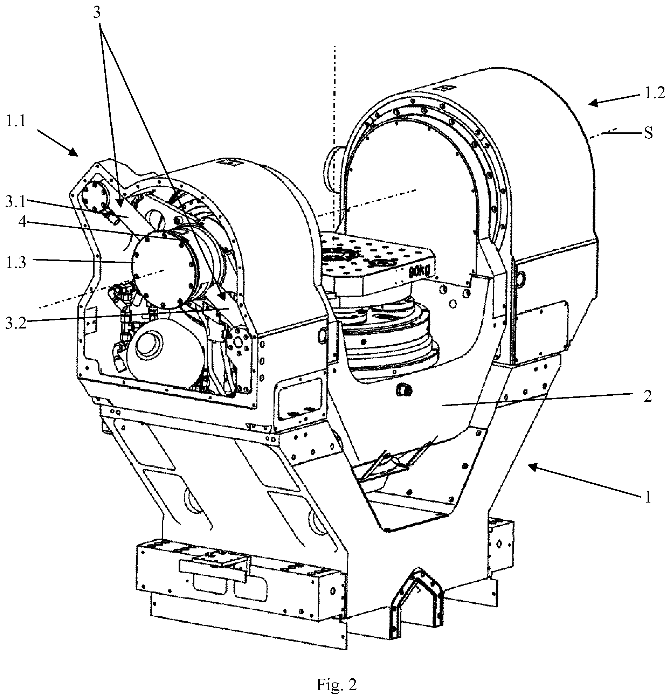

Figur 2 zeigt ein Gehäuse 1 in der Art eines U-Profils, wobei sich zwischen dem ersten Schenkel 1.1 und dem zweiten Schenkel 1.2 des Gehäuses 1 die Schwenkbrücke 2 erstreckt. In dem ersten Schenkel 1.1 ist vorzugsweise ein nicht bezeichneter Antrieb in Form eines Direktantriebs angeordnet. Die Schwenkbrücke 2 ist um eine horizontal ausgerichtete Schwenkachse S mittels des Direktantriebs schwenkbar angeordnet und in dem ersten und zweiten Schenkel 1.1, 1.2 mittels einer Lagerung 1.3 (nur am ersten Schenkel 1.1 angetragen) schwenkbar montiert.

Durch das offen dargestellte Gehäuse des ersten Schenkels 1.1 ist erkennbar, dass an die Lagerung 1.3 eine Kompensationseinheit 3 in Form von zwei Hydraulikzylindern 3.1, 3.2 zur Kompensation des Gewichts der Schwenkbrücke 2 und eines darauf aufgenommenen (hier nicht dargestellten) Werkstücks angeordnet ist, wobei die Kompensationseinheit 3 mit einem Unterstützungsmoment auf die Schwenkbrücke 2 wirkt.
Die beiden Hydraulikzylinder 3.1, 3.2 greifen an sich gegenüberliegenden Seiten der Lagerung 1.3 an und stützen sich mit ihren von der Lagerung 1.3 abgewandten Enden am Gehäuse 1 innen am Bereich des ersten Schenkels 1.1 ab.
Die mechanische Anbindung der Hydraulikzylinder 3.1, 3.2 wird über eine Kurbelwelle 4 realisiert.

Es ist möglich, auch die Lagerung der Schwenkbrücke 2 im zweiten Schenkel 1.2 über eine derartige Kompensationseinheit 3 abzustützen.

Durch die, in einer vorteilhaften Ausgestaltung beidseitig angebrachten Kompensationseinheiten 3 wird das Unterstützungsmoment symmetrisch in die Schwenkbrücke 2 eingebracht und so eine Torsion der Konstruktion verhindert.

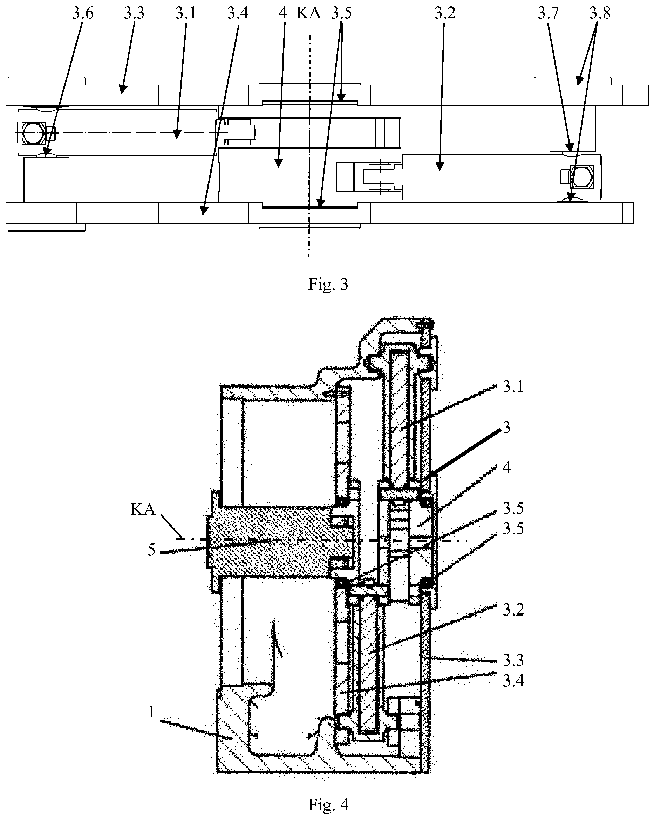

In Figur 3 ist eine Kompensationseinheit 3 für eine erfindungsgemäße Werkzeugmaschine dargestellt. Die Kompensationseinheit 3 weist einen ersten und zweiten Hydraulikzylinder 3.1, 3.2 auf, wobei die kolbenstangenseitigen Enden der Hydraulikzylinder 3.1, 3.2 mit der Kurbelwelle 4 verbunden sind. Die Hydraulikzylinder 3.1, 3.2 sind entlang der Kurbelwellenachse KA zueinander versetzt angeordnet.

Die Kurbelwelle 4 ist zwischen einer ersten Verbindungsstrebe 3.3 und einer zweiten Verbindungsstrebe 3.4 mittels jeweils eines, in der jeweiligen Verbindungsstrebe 3.3, 3.4 zentral angeordneten Lagers 3.5 abgestützt. Die Verbindungsstreben 3.3, 3.4 sind zueinander beabstandet über Querstege 3.6, 3.7 verbunden und weisen an ihrem ersten und zweiten Ende jeweils eine Durchgangsbohrung 3.8 auf, mittels derer die Querstege 3.6, 3.7 mit der ersten und zweiten Verbindungsstrebe 3.3, 3.4 verbunden sind.
Die Querstege 3.6, 3.7 dienen der Aufnahme des von der Kurbelwelle 4 wegweisenden Endes der Hydraulikzylinder 3.1, 3.2. Ein derart aufgebautes Kompensationselement 3 kann als einzelne Einheit Anwendung finden. In einer alternativen Ausgestaltung können die Lagerungen 3.5 der Kurbelwelle 4 sowie die Aufnahmen der Querstege 3.6, 3.7 direkt in das Gestellt des ersten und/oder zweiten Schenkels des Gehäuses integriert sein.

Figur 4 zeigt einen Längsschnitt durch die Kompensationseinheit 3 gemäß Figur 3. Die Kurbelwelle 4 ist derart angeordnet, dass die eingreifenden Hydraulikzylinder 3.1, 3.2 versetzt zueinander mit der Kurbelwelle 4 verbunden sind.

Die Kurbelwelle 4 ist mit einer Übertragungswelle 5 verbunden, die direkt oder indirekt mit der nicht dargestellten Schwenkbrücke verbindbar ist. Die Hydraulikzylinder 3.1, 3.2 sind direkt mit den Verbindungsstreben 3.3, 3.4 verbunden, wobei die gesamte Kompensationseinheit 3 in dem Gehäuse 1 abstützbar ist. Auch eine direkte Anbindung der Hydraulikzylinder 3.1, 3.2 an das Gehäuse 1 ist denkbar.

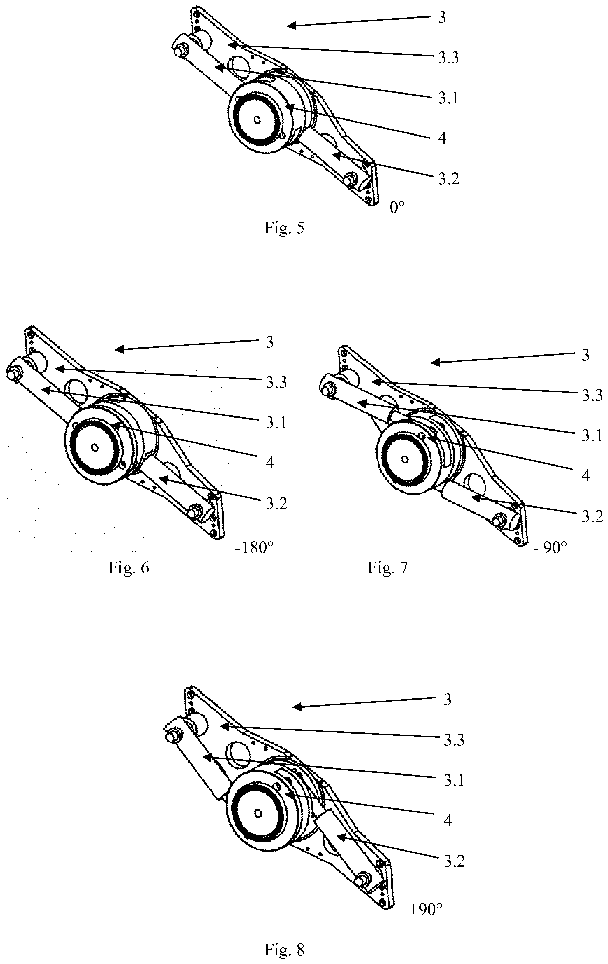

In den Figuren 5 bis 8 ist eine Kompensationseinheit 3 für eine erfindungsgemäße Werkzeugmaschine in unterschiedlichen Schwenkwinkeln dargestellt, wobei eine der zwei Verbindungsstreben 3.3 oder 3.4 für eine übersichtliche Darstellung ausgeblendet ist. Die Kurbelwelle 4 ist an der rückseitigen Verbindungsstrebe 3.3 montiert. Die Kurbelwelle 4 ist derart ausgebildet, dass der erste Hydraulikzylinder 3.1 versetzt zu dem zweiten Hydraulikzylinder 3.2 entlang der Kurbelwellenachse KA in die Kurbelwelle 4 eingreift. Aufgrund der versetzten Anordnung der Hydraulikzylinder 3.1, 3.2 ist ein erhöhter Schwenkwinkel umsetzbar. In Figur 5 ist der Ausgangszustand der Kompensationseinheit 3 mit einem Schwenkwinkel von 0° dargestellt. Ein Schwenkwinkel von 0° ist eine Gleichgewichtslage, wobei kein Unterstützungsmoment wirkt. Die Hydraulikzylinder 3.1, 3.2 sind in einer Ebene fluchtend zueinander angeordnet und vollständig eingefahren.

Figur 6 zeigt eine um -180° geschwenkte Kurbelwelle 4, die mit einer Schwenkeinheit direkt oder indirekt verbindbar ist. Die Hydraulikzylinder 3.1, 3.2 stellen den maximalen Hub bereit, wobei die Kolbenstangen innerhalb der Freiräume der Kurbelwelle 4 angeordnet sind.

Die Figuren 7 und 8 zeigen einen Schwenkwinkel der Kompensationseinheit 3 von -90° und +90°. In Figur 7 ist der Hydraulikzylinder 3.1 an der Kurbelwelle 4 oberhalb des Hydraulikzylinders 3.2 angeordnet, in Figur 8 unterhalb. Das unterstützende Moment der Kompensationseinheit 3 entsteht, je nach Winkelauslenkung der Schwenkbrücke und hat sein Maximum bei ca. +90° und -90° Schwenkwinkel.
Aus den dargestellten Figuren ergibt sich ein nutzbarer Schwenkwinkel von insgesamt 270°.

In einer vorteilhaften Ausgestaltung sind die Hydraulikzylinder 3.1, 3.2 mittels je eines Rückschlagventils mit Federrückstellung regelbar.
Das Rückschlagventil dient zugleich als Sicherheitsbauteil gegen Rückfallen der Schwenkbrücke durch Sperren des Ölrückflusses aus dem Zylinder bei Stromausfall.

Das Rückschlagventil ist direkt an dem Hydraulikzylinder 3.1, 3.2 angeordnet und regelt den Hydraulikdruck in Abhängigkeit des aufzubringenden Unterstützungsmomentes.

Die Hydraulikzylinder 3.1, 3.2 sind vorzugsweise mittels eines gemeinsamen Druckspeichers mit Druck beaufschlagbar, wodurch in dem ersten und zweiten Hydraulikzylinder 3.1, 3.2 der gleiche Druck wirkt.
Durch Änderung des Drucks wird eine direkte Änderung des Drehmoments bewirkt. Das Drehmoment ist je nach Gewicht des auf der Schwenkbrücke angeordneten Werkstücks und des Schwenkwinkels proportional änderbar. Das bedeutet, dass je größer der Schwenkwinkel ist, desto größer ist das wirkende Moment.
Vorteilhafter Weise ist das System ein geschlossenes System, das heißt, es wird keine weitere Energie von außen zugeführt.

Das Kompensationselement kann sowohl auf der Antriebsseite der Schwenkbrücke als auch auf der gegenüberliegenden Seite angeordnet sein.

### Bezugszeichenliste

- 1: Gehäuse
- 1.1: Erster Schenkel
- 1.2: Zweiter Schenkel
- 1.3: Lagerung
- 2: Schwenkbrücke
- 3: Kompensationseinheit/Hydraulikzylinder
- 3.1: Erster Hydraulikzylinder
- 3.2: Zweiter Hydraulikzylinder
- 3.3: Erste Verbindungsstrebe
- 3.4: Zweite Verbindungsstrebe
- 3.5: Lager
- 3.6: Quersteg
- 3.7: Quersteg
- 3.8: Durchgangsbohrung
- 4: Kurbelwelle
- 5: Übertragungswelle

- S: Schwenkachse
- KA: Kurbelwellenachse

## Patentansprüche

1. Werkzeugmaschine, welche eine um eine Schwenkachse (S) schwenkbare Schwenkbrücke (2) zur Aufnahme eines zu bearbeitenden Werkstücks aufweist, **dadurch gekennzeichnet, dass** an mindestens einem Schwenklager (1.3) der Schwenkbrücke (2) entlang der Schwenkachse sich eine Kurbelwelle erstreckt und dass quer zu der Schwenkachse (S) ausgerichtete und an sich gegenüberliegenden Seiten des Schwenklagers (1.3) in die Kurbelwelle (4) eingreifende hintereinander angeordnete Stellelemente (3.1, 3.2) angeordnet sind, mit welchen mittels der Kurbelwelle (4) ein Drehmoment auf das Schwenklager (1.3) übertragbar ist, welches dem durch das Gewicht des Werkstückes und der Vorrichtung verursachte Drehmoment der Schwenkbrücke (2) entgegenwirkt.

2. Werkzeugmaschine nach Anspruch 1, **dadurch gekennzeichnet, dass** die Stellelemente (3.1, 3.2) in Form zweier sich gegenüberliegenden Zylindern (3.1, 3.2), deren Axialkräfte sich weitestgehend oder vollständig kompensieren, ausgebildet sind.

3. Werkzeugmaschine nach Anspruch 1 oder 2, **dadurch gekennzeichnet, dass** die beiden Stellelemente (3.1, 3.2) in Form von hydraulischen Zylindern (3.1, 3.2) eines hydraulischen Drehmomentenausgleichs ausgebildet sind und als geschlossenes System mit Druckflüssigkeitsspeicher am Schwenklager (1.3) angreifen.

4. Werkzeugmaschine nach einem der Ansprüche 1 bis 3, **dadurch gekennzeichnet, dass** an einem Schwenklager (1.3) zwei Stellelemente in Form zweier Hydraulikzylindern (3.1, 3.2) sich im Wesentlichen gegenüberliegend angreifen, wobei mit jedem Schwenkwinkel ein lageabhängiges Drehmoment auf das Schwenklager (1.3) der Schwenkbrücke (2) übertragbar ist.

5. Werkzeugmaschine nach einem der Ansprüche 1 bis 4, **dadurch gekennzeichnet, dass** sich die entstehenden Axialkräfte der beiden Zylinder (3.1, 3.2) durch eine geschlossene Verbindung aufheben oder weitestgehend aufheben derart, dass zwar ein lageabhängiges Drehmoment, aber kein oder nahezu kein Biegemoment auf die Schwenkachse (S) wirkt.
